# EUROPEAN PATENT APPLICATION

(11) **EP 4 659 943 A1**
(43) Date of publication of application: **10.12.2025**
(21) Application number: 24179673.9
(22) Date of filing: 03.06.2024
(51) Int. Cl.: B29C 70/44, B29C 48/00, B29C 70/54, B29C 48/12, B29C 69/00

(54) **BONDING MATERIAL DISTRIBUTION DEVICE FOR A VARTM-PROCESS FOR MANUFACTURING A WIND TURBINE COMPONENT**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The present invention relates to a bonding material distribution device (1) for a VARTM-process for manufacturing a wind turbine component, comprising a bonding material transport duct (2) and a main body (3), wherein the bonding material transport duct (2) is arranged at the main body (3). The bonding material transport duct (2) comprises a plurality of duct segments (4), arranged in-line and separated from each other by a separation (5), wherein the main body (3) is located aside the separation (5). The invention also relates to a method for manufacturing a bonding material distribution device (1) for a VARTM-process for manufacturing a wind turbine component.

## Description

The present invention relates to a bonding material distribution device for a VARTM-process for manufacturing a wind turbine component. The present invention further relates to a method for manufacturing a bonding material distribution device for a VARTM-process for manufacturing a wind turbine component.

Large composite components for wind turbines, such as rotor blade shells or the like, are usually manufactured in a vacuum assisted resin transfer molding process (VARTM). These manufacturing processes involve the usage of a rigid mold surface on which a structural lay-up, such as glass fibers or the like, is placed. On top of the lay-up, usually, additional auxiliary materials, such as glass fibers, balsa wood, foam, plastic material or the like, are placed. These materials can further strengthen the structure of the composite component and further improve the infusion of a bonding material plus the evacuation of residual air and moisture during the infusion process. Finally, a vacuum tight molding tool is established by covering the lay-up with a vacuum tight foil.

For the infusion of the bonding material, e.g., a 2-component epoxy or any other suitable bonding material, a distribution device is needed. Distribution devices often come in form of a hollow profile, placed on top of a mesh and non-woven fabrics to act as a large volume distribution device, supported by layers feeding superficial and spreading out the liquid bonding material.

Bonding material distribution devices come in a variety of geometries, omega shaped, tubular but also as relatively flat extruded devices, holding a number of reinforcing ribbons to ensure that the inner channels for transferring the bonding material must be able to withstand full vacuum under which the vacuum tight membrane gives a uniform distributed load from the differential pressure.

Extruded profiles are convenient to use for such bonding material distribution devices but must be handled as shorter segments, as the same constraints that apply to other tubular goods, like steel profiles, copper tubes and the like, apply. Logistics and handling call for shorter segments due to the overall stiffness of the items.

Using shorter segments of bonding material distribution devices results in the need for many connectors in order to create the needed length, and as a result, the assembly process is time consuming and the end result is fragile.

These segments can be about 2 meters long and are connected to a long bonding material distribution device of more than 100 meters by clicking on connectors and using tape for securing. When establishing mold vacuum and consolidating the lay-up, the long combined segments can dislocate and even come apart, possibly resulting in a partly blockage of the epoxy flow with the risk of creating insufficient wetting of the fibers in the laminate.

It is important to realize that any distribution system for a VARTM-process using thermosetting resin is one-time use only due to the crosslinking of the normally 2-component system. In other words, when the two components react and solidify, re-liquefaction of the compound is not feasible. Thermosets call for cheap, simple consumption materials and less time consuming working processes.

It is therefore the object of the present invention to eliminate or at least partially eliminate the disadvantages described above in the case of a bonding material distribution device for a VARTM-process for manufacturing a wind turbine component. In particular, it is the object of the present invention to create a bonding material distribution device and a method for manufacturing a bonding material distribution device for a VARTM-process for manufacturing a wind turbine component, which provide for an improved process stability for manufacturing a wind turbine component in a simple and inexpensive manner.

The above object is achieved by the claims. Accordingly, the problem is solved by a bonding material distribution device for a VARTM-process for manufacturing a wind turbine component with the features of the independent claim 1 and by a method for manufacturing a bonding material distribution device for a VARTM-process for manufacturing a wind turbine component with the features of the subordinate claim 13. Further features and details of the invention emerge from the subclaims, the description and the drawings. Features and details that are described in connection with the bonding material distribution device according to the invention naturally also apply in connection with the method for manufacturing a bonding material distribution device according to the invention and vice versa, so that with regard to the disclosure of the individual aspects of the invention, reference is or can always be made to each other.

According to a first aspect of the invention, the object is achieved by a bonding material distribution device for a VARTM-process for manufacturing a wind turbine component. The bonding material distribution device comprises a bonding material transport duct and a main body, wherein the bonding material transport duct is arranged at the main body. According to the invention, the bonding material transport duct comprises a plurality of duct segments, arranged in-line and separated from each other by a separation, wherein the main body is located aside the separation.

Within the limits of the invention, a bonding material distribution device for a VARTM is considered a device, suitable for distributing an adhesive, e.g., resin, epoxy, 2-component epoxy or the like, within a production mold for a vacuum assisted resin transfer molding process (VARTM). For this purpose, the bonding material distribution device comprises the bonding material transport duct.

The bonding material transport duct is configured to withstand the pressures during the VARTM-process to keep an inner channel of the bonding material transport duct open. Therefore, it is preferred that the bonding material transport duct has a shape and wall thickness, designed for withstanding the process forces during the VARTM-process. Thus, it is ensured that the adhesive can be transported into all destined areas of the production mold during the VARTM-process. The bonding material transport duct can have, e.g., a round, oval, rectangular, trapezoid or comparable cross-section. Preferably, inner walls of the bonding material transport duct are smooth to provide little resistance to the adhesive flowing through. Moreover, the bonding material transport duct is arranged at the main body. This means that the bonding material transport duct and the main body are mutually fixed or monolithically formed.

Furthermore, the bonding material transport duct comprises the plurality of duct segments. The duct segments of the bonding material transport duct are arranged in-line, preferably coaxially, to provide a common channel for transporting the adhesive to the destined areas, namely the bonding material transport duct. The duct segments are separated from each other by the separation. This means that between two adjacent duct segments, a slit or the like is formed. Preferably, the slit reaches up to a top plate of the main body. It can be provided that the slit reaches further into the top plate and ends within the top plate, ensuring that the top plate is still strong enough for withstanding forces during the handling of the bonding material distribution device.

A preferred length of a duct segment can be, e.g., between 2 cm and 10 cm, preferably about 5 cm. A preferred inner diameter of the bonding material transport duct and, therefore, of the duct segments can be, e.g., between 0.5 cm and 5 cm, preferably about 2 cm. A preferred total length of the bonding material distribution device in a deployed state can be, e.g., between 5 m and 30 m, preferably about 20 m. A preferred thickness of the separation in the longitudinal direction of the bonding material distribution device is between 0.1 mm and 2 mm. Preferably, the duct segments comprise a rigid material to keep the inner channel open, especially during the VARTM-process.

The separation can be configured such that in a deployed state on a flat or substantially flat surface, face sides of adjacent duct segments can contact each other. Moreover, in the deployed state, a narrow gap can be formed between the adjacent face sides of the adjacent duct segments. The split can be further configured such that, in a coiled up or folded state, the adjacent face sides of the adjacent duct segments can be mutually tilted. Thus, a lager gap is formed between these face sides.

Preferably, the main body has a band-like shape. Side areas of the main body can be bent in a direction of the bonding material transport duct. The main body can be configured as a massive body, a structured body with bars, walls or the like. It is preferred that the main body has a plate like or substantially plate like, preferably closed, outer surface. The main body is located aside the separation. This means that with respect to a longitudinal direction of the bonding material distribution device, the main body is laterally shifted from the separation. Preferably, the separation ends at the main body. Further preferred, the separation is perpendicular to the main body or at least to a top plate of the main body.

The main body is configured as the connecting base for mutually connecting two adjacent duct segments. This means that with respect to a longitudinal extension of the bonding material distribution device, the main body is arranged at least in the area of the separation, thereby interconnecting the adjacent duct segments. By these means, a relative translational movement of the duct segments is prohibited by the main body. It is preferred that the main body does not engage into the bonding material transport duct. Preferably, the main body comprises a rigid material to keep the duct segments bound together, especially during handling of the bonding material distribution device.

However, a relative tilting action of the adjacent duct segments, preferably about an axis perpendicular to the longitudinal direction of the bonding material distribution device, is still allowed by the main body. For this reason, it is preferred that the main body comprises or consists of a flexible or at least bendable material.

A bonding material distribution device according to the invention has the advantage over conventional bonding material distribution devices that in a simple and inexpensive way, an adhesive transportation channel can be provided at a production mold for a VARTM-process for manufacturing a wind turbine component. Due to the bendability of the bonding material distribution device between the deployment state and the a coiled up or folded state, the transportation of the bonding material distribution device to the production mold and the deployment of the bonding material distribution device within the production mold is improved significantly compared to common bonding material distribution devices.

According to a preferred further development of the invention, a bonding material distribution device can provide that a longitudinal extension of the main body is at least three times of the longitudinal extension of the duct segments. This means that the main body at least connects three adjacent duct segments. In this case, it is preferred that the longitudinal ends of the main body are spaced apart from the adjacent separations of the duct segments in longitudinal direction. Thus, a longer chain of a plurality of main bodies and duct segments can be provided. Preferably, the main body is configured as a continuous part, extending over the full length or at least substantially the full length, of the bonding material distribution device. By these mean, all duct segments of the bonding material distribution device are mutually interconnected by the same main body. For providing a production mold for manufacturing a large wind turbine component, like a rotor blade, with bonding material distribution devices, such bonding material distribution devices can be coupled together to constitute a long bonding material distribution device, which can provide the whole production mold with adhesive. The longer the bonding material distribution devices, the less coupling elements and coupling procedures are needed. This has the advantage that in a simple and inexpensive way, the arrangement of bonding material distribution devices within the production mold is further improved.

It is preferred, according to the invention, that the duct segments have a material discharge opening, facing away from the main body. This means e.g., that the material discharge opening can face away from a top plate of the main body. Preferably, the material discharge opening has an area of the same size as a cross section of the adhesive transport channel of the duct segment. The material discharge opening can have a round, oval, rectangular or similar cross-section. By facing away from the main body, the supply of the production mold with adhesive is improved. With the material discharge opening of the duct segments and the separations between the duct segments, a plurality of opportunities for the adhesive to exit the bonding material transport duct and to enter the production mold is established. This has the advantage that in a simple and inexpensive way, the supply of the production mold with adhesive is further improved.

Further preferred, the material discharge opening extends along the longitudinal direction of the duct segments. This means that an extension of the material discharge opening in the longitudinal direction is larger than the extension of the material discharge opening in the lateral direction. Preferably, the extension of the material discharge opening in the longitudinal direction is at least half of the length of the respective duct segment. Further preferred, the material discharge opening extends along the whole longitudinal extension of the duct segment. Thus, the material discharge opening extends from a first longitudinal end of the duct segment to a second longitudinal end of the same duct segment. Thus, both longitudinal ends of the material discharge opening are arranged at a separation. Moreover, it is preferred that a width of the material discharge opening is constant over the longitudinal extension of the material discharge opening. It is preferred that the material discharge opening is slit-like shaped. This has the advantage that in a simple and inexpensive way, the supply of the production mold with adhesive is further improved.

In a particularly preferred embodiment of the invention, the main body constitutes a top plate of the duct segments. This means that without the main body, the duct segments would comprise an opening towards that respective side and would need a closure for that opening, e.g., a wall, foil or the like. By closing this opening with the main body, no further wall or the like is needed. Preferably, the top plate is constituted by a top plate of the main body. Moreover, to constitute the top plate, the main body is securely fixed to the duct segments. This has the advantage that in a simple and inexpensive way, a weight reduced, size reduced, less complex and durable bonding material distribution device is provided.

Preferably, a plurality of duct segments is arranged side-by-side at the main body, interconnected by the main body and aligned with a plurality of duct segments and thus forming a plurality of parallel arranged bonding material transport ducts. According to this preferred embodiment, the bonding material distribution device comprises several rows of bonding material transport ducts, e.g., 3, 4, 5, 6, 7 or even more rows bonding material transport ducts. It is preferred that the duct segments are arranged on the same plane. Alternatively, the duct segments can be arranged in two planes, e.g., with a mutual offset between the two planes of half the width of the duct segment. Preferably, the bonding material transport ducts are arranged such that the separations of the rows are at the same longitudinal position for each duct segment of a particular row. In other words, the separations constitute a common separation over the widths of the bonding material distribution device. With a plurality of bonding material transport ducts, the volume flow of adhesive through the bonding material distribution device can be increased. Moreover, with the separate bonding material transport ducts, different bonding materials, e.g., both components of a 2-component bonding material, can be transported by the bonding material distribution device separately and distributed to a desired area within the mold for being mixed. This has the advantage that in a simple and inexpensive way, the supply of the production mold with adhesive is further improved.

According to a preferred embodiment of the invention, the main body constitutes a common separation wall of two side-by-side arranged bonding material transport ducts. Consequently, the main body constitutes the common separation walls of the duct segments. In other words, two adjacent side-by-side arranged duct segments share a common side wall to separate the bonding material transport ducts from each other. Thus, on this particular side, the bonding material transport ducts do not need further walls. Preferably, for all bonding material transport ducts, the main body constitutes the common separation walls. By these means, the size and material demand for manufacturing the bonding material distribution device is reduced. This has the advantage that in a simple and inexpensive way, the supply of the production mold with adhesive is further improved.

Particularly preferred, the main body constitutes an outer side wall of the bonding material transport ducts. Consequently, the main body constitutes the outer side wall of the duct segments. The outer side wall is the side wall of the outermost duct segments of the side-by-side arranged duct segments. Thus, on this particular side, the bonding material transport ducts do not need a further wall. It is preferred that the outer side walls of both outermost duct segments are constituted by the main body. By these means, the size and material demand for manufacturing the bonding material distribution device is reduced. This has the advantage that in a simple and inexpensive way, the supply of the production mold with adhesive is further improved.

It is preferred according to the invention, that the main body is monolithically formed with the duct segments. In other words, it is preferred that the duct segments and the main body are manufactured of the same material without any fixing joints between the duct segments and the main body. Preferably, the duct segments are manufactured inside the main body. Thus, a compact and rigid bonding material distribution device is provided. This has the advantage that in a simple and inexpensive way, the supply of the production mold with adhesive is further improved.

Further preferred, the main body and the duct segments are manufactured by an extrusion process, followed by a cutting and/or punching process. It is preferred that in the extrusion process, the main body with a plurality of side-by-side arranged bonding material transport ducts is manufactured, wherein the bonding material transport ducts are still continuous bonding material transport ducts without inner separations. In the cutting or punching process, the bonding material transport ducts are separated, each into the plurality of duct segments. By these means, the separations are established. Further preferred, the cutting and/or punching process is performed such that the separation lines between the side-by-side arranged duct segments are in the same longitudinal position. Thus, the folding and bending of the bonding material distribution device is improved. This has the advantage that in a simple and inexpensive way, the supply of the production mold with adhesive is further improved.

According to a preferred embodiment of the invention, the bonding material distribution device is coiled up on a spool and is configured for being unwound from the spool to fit to a flat surface. Preferably, the bonding material distribution device is coiled up in a way that a top side of the main body, which is facing away from the bonding material transport duct, is facing towards a center of the spool. Due to the separation of the bonding material transport duct into the plurality of duct segments, the bending of the bonding material distribution device is facilitated and therefore, the coiling-up onto the spool is improved. Preferably, the spool is configured for being handled by a crane for deployment of the bonding material distribution device inside the mold. By providing the bonding material distribution device on the spool, the transportation of the bonding material distribution device from a storage place to the deployment location is improved. This has the advantage that in a simple and inexpensive way, the supply of the production mold with adhesive is further improved.

Further preferred, the main body and/or the bonding material transport ducts are covered by a flow mesh and/or felt and/or peel ply and/or a vacuum foil. Preferably, more bonding material distribution devices are arranged side-by-side and mutually spaced apart. It is preferred that the vacuum foil or vacfilm is provided at the top plate of the main body. It is preferred that an adhesive is applied under the vacuum foil for sticking the main body to a vacuum foil. Moreover, more bonding material distribution devices can be stuck to one vacuum foil, e.g., side-by-side with the same orientation. Preferably, the flow mesh and/or felt and/or peel ply is applied to the opposite side of the main body, covering the bonding material transport ducts. It is preferred that the flow mesh and/or felt and/or peel ply and/or vacuum foil is provided as a continuous layer with the same length as the bonding material transport duct and/or the main body. Preferably, the arrangement of the main body with the bonding material transport ducts, the flow mesh, the felt, the peel ply and the vacuum foil is such that it is designed for the VARTM-process for manufacturing the wind turbine component. Preferably, the arrangement of the main body with the bonding material transport ducts, the flow mesh, the felt, the peel ply and the vacuum foil is coiled-up on a spool. By providing the bonding material distribution device with one or more of these layers, the preparation process of the mold is significantly improved, since the layers do not have to be arranged one by one at the mold anymore. This has the advantage that in a simple and inexpensive way, the supply of the production mold with adhesive is further improved.

According to a second aspect of the invention, the object is achieved by a method for manufacturing a bonding material distribution device for a VARTM-process for manufacturing a wind turbine component. The method comprises:
- manufacturing a continuous main body with at least one bonding material transport duct in an extrusion process,
- cutting or punching the at least one bonding material transport duct into a plurality of duct segments in a way that the main body maintains a continuous part, and
- coiling-up the main body with the duct segments.

The continuous main body is manufactured with at least one bonding material transport duct. It is preferred that the main body and the bonding material transport duct are monolithically formed. Further preferred, a plurality of bonding material transport ducts is arranged side-by-side at the main body. The continuous main body with the bonding material transport ducts is manufactured in an extrusion process.

The cutting is performed by a cutting tool. The punching is performed by a punching tool. With the cutting and the punching, the duct segments are manufactured from the bonding material transport ducts. Thereby, the separations of the duct segments are generated. Preferably, a cutting line or a punching line is arranged perpendicular to the longitudinal extension of the bonding material distribution device. Preferably, the continuous main body is also cut by the cutting tool or punched by the punching tool to generate a main body with a predetermined length, e.g., 30 m, 20 m, 10 m long or more standard lengths.

Finally, the bonding material distribution device is coiled-up onto a spool or the like. Thus, the transportation and the deployment of the bonding material distribution device is improved significantly.

The method for manufacturing a bonding material distribution device for a VARTM-process for manufacturing a wind turbine component according to the invention has all the advantages that have already been described for a bonding material distribution device for a VARTM-process for manufacturing a wind turbine component according to the first aspect of the invention. Accordingly, the method according to the invention has the advantage over conventional methods that in a simple and inexpensive way, an adhesive transportation channel can be provided at a production mold for a VARTM-process for manufacturing a wind turbine component. Due to the bendability of the bonding material distribution device between the deployment state and the coiled-up or folded state, the transportation of the bonding material distribution device to the production mold and the deployment of the bonding material distribution device within the production mold are improved significantly compared to common bonding material distribution devices.

It is preferred that the cutting or punching is performed with the material of the bonding material transport duct being still warm from the extrusion process. Preferably, the freshly extruded continuous main body is directly provided at the cutting tool or the punching tool for being cut or punched right after the extrusion process. With the comparatively high material temperature, the cutting and punching process is facilitated, and damages to the main body and the bonding material transport duct can be avoided better. This has the advantage that in a simple and inexpensive way, the process stability of the manufacturing process for manufacturing the bonding material distribution device is further improved.

Preferably, after the cutting or punching and before the coiling-up, the main body and/or the bonding material transport duct is covered by a layer of flow mesh and/or a layer of felt and/or a layer of peel ply and/or a layer of vacuum foil. It is preferred that vacuum foil is provided at the top plate of the main body. Preferably, the flow mesh and/or felt and/or peel ply is applied to the opposite side of the main body, covering the bonding material transport ducts. It is further preferred that the flow mesh and/or felt and/or peel ply and/or vacuum foil is provided as a continuous layer with the same length as the bonding material transport duct and/or the main body. Preferably, the main body with the bonding material transport ducts, the flow mesh, the felt, the peel ply and the vacuum foil are arranged such that it is designed for the VARTM-process for manufacturing the wind turbine component. After that, the arrangement of the main body with the bonding material transport ducts, the flow mesh, the felt and, the peel ply and the vacuum foil is coiled-up on the spool. Preferably, more bonding material distribution devices are arranged side-by-side and mutually spaced apart. By providing the bonding material distribution device with one or more of these layers, the preparation process of the mold is significantly improved, since the layers do not have to be arranged one by one at the mold anymore. This has the advantage that in a simple and inexpensive way, the supply of the production mold with adhesive is further improved.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic perspective view of a bonding material distribution device according to a preferred embodiment of the invention before the manufacturing of the duct segments,
Figure 2 shows a schematic perspective view of a coiled-up bonding material distribution device according to a preferred first embodiment of the invention,
Figure 3 shows a schematic perspective view of the bonding material distribution device of fig. 2, coiled-up on a spool,
Figure 4 shows a schematic perspective view of the bonding material distribution device of fig. 2 in a coiled-up state and in a preassembled state,
Figure 5 shows a schematic perspective view of the bonding material distribution device of fig. 4 in a deployed state, and
Figure 6 shows a preferred embodiment of the method for manufacturing a bonding material distribution device for a VARTM-process for manufacturing a wind turbine component in a flow chart.

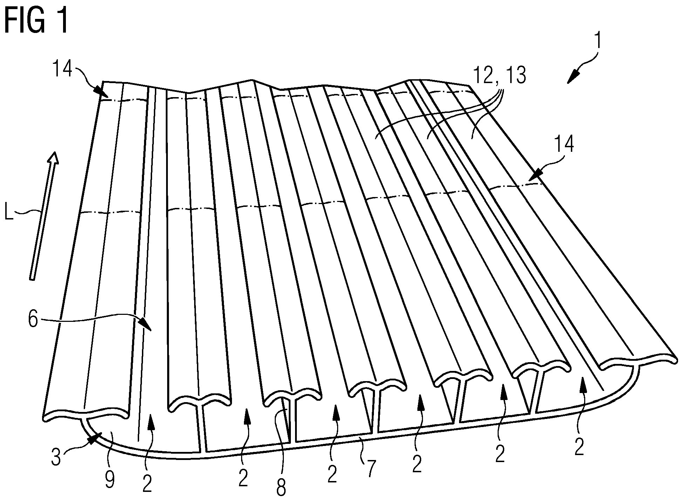

Elements with the same function and effectiveness are denoted each in figs. 1 - 6 with the same reference numbers.

In fig. 1, a schematic perspective view of a bonding material distribution device 1 according to a preferred embodiment of the invention is shown before the manufacturing of the duct segments 4. The bonding material distribution device 1 comprises a main body 3 and a plurality of bonding material transport ducts 2. The bonding material distribution device 1 substantially extends in a longitudinal direction L. In this example, six bonding material transport ducts 2 are provided. The bonding material transport ducts 2 are monolithically formed with the main body 3 and arranged parallel side-by-side.

In this figure, the bonding material distribution device 1 is shown from its bottom side for better clearness. The main body 3 constitutes a top plate 7 of the bonding material transport ducts 2, inner separation walls 8 between the bonding material transport ducts 2, outer side walls 9 of the two outermost bonding material transport ducts 2 and a bottom wall 12 of the bonding material transport ducts 2.

Each bonding material transport duct 2 comprising a centered discharge opening 6 for discharging the bonding material. The discharge openings 6 are arranged parallel to the longitudinal direction L and divide the bottom wall 12 into seven wall segments 13. A width of the discharge openings 6 is about a third of a width of the bonding material transport ducts 2. On each wall segment 13, a prospective separation 14 for a following cutting or punching process is indicated.

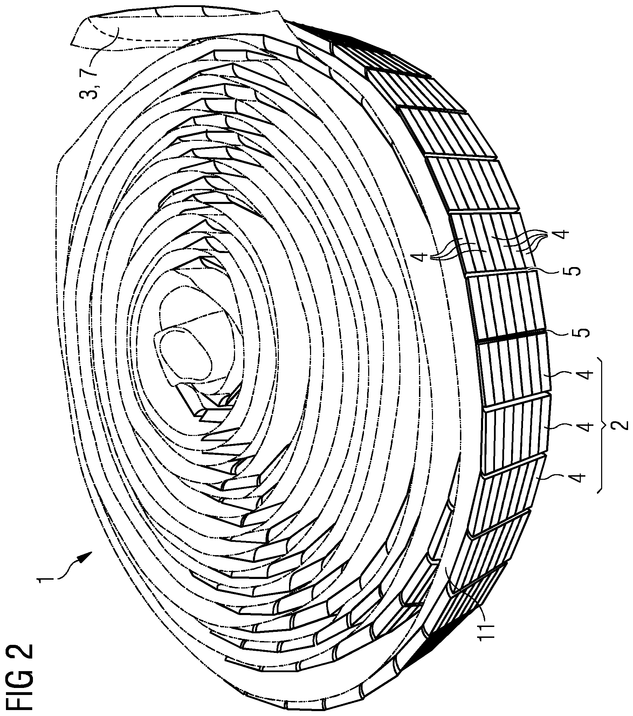

In fig. 2, a coiled-up bonding material distribution device 1 according to a preferred first embodiment of the invention is shown in a schematic perspective view.

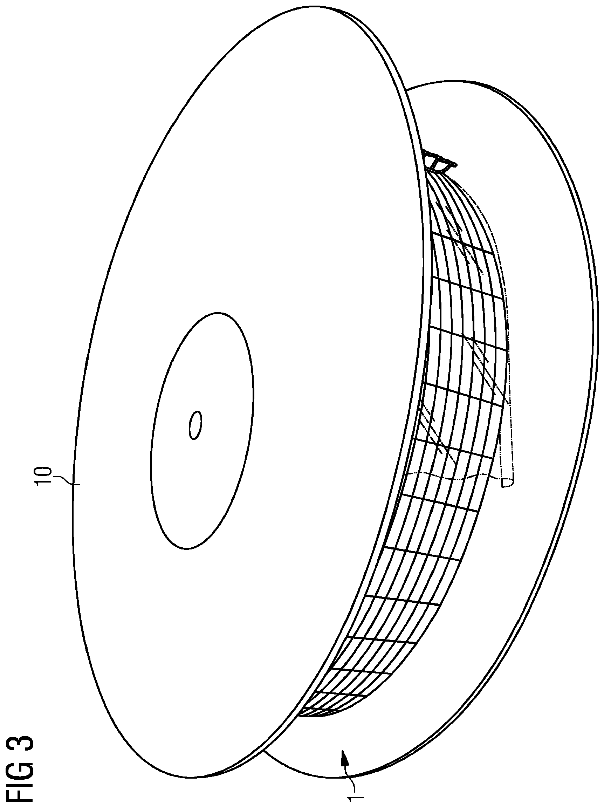

Fig. 3 shows the bonding material distribution device 1 coiled-up on a spool 10. The bonding material distribution device 1 is coiled-up in a way that the top plate 7 of the main body 3 is facing towards an inside of the coil and separations 5 between the duct segments 4 are facing away from the inside of the coil. The duct segments 4, which are arranged in-line, constitute a common bonding material transport duct 2.

Due to the separations 5, the bonding material distribution device 1 can be coiled-up easily. In the coiled-up state, a cross-section of the separations 5 is v-shaped. On the top plate 7, a backing layer preferably in form of vacuum foil 11 is attached. The spool 10 is preferably configured for being handled by a crane, e.g., for arranging the spool 10 onto a transportation device, for moving the spool 10 to a deployment site, like a mold, and for deploying the bonding material distribution device 1 at the deployment site.

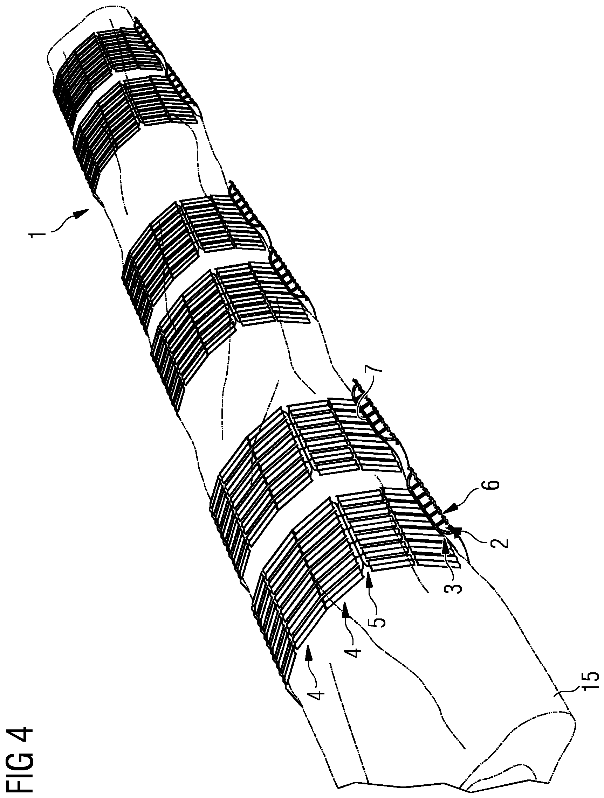

Fig. 4 shows a schematic perspective view of the bonding material distribution device 1 of fig. 2 in a coiled-up state and in a preassembled state.

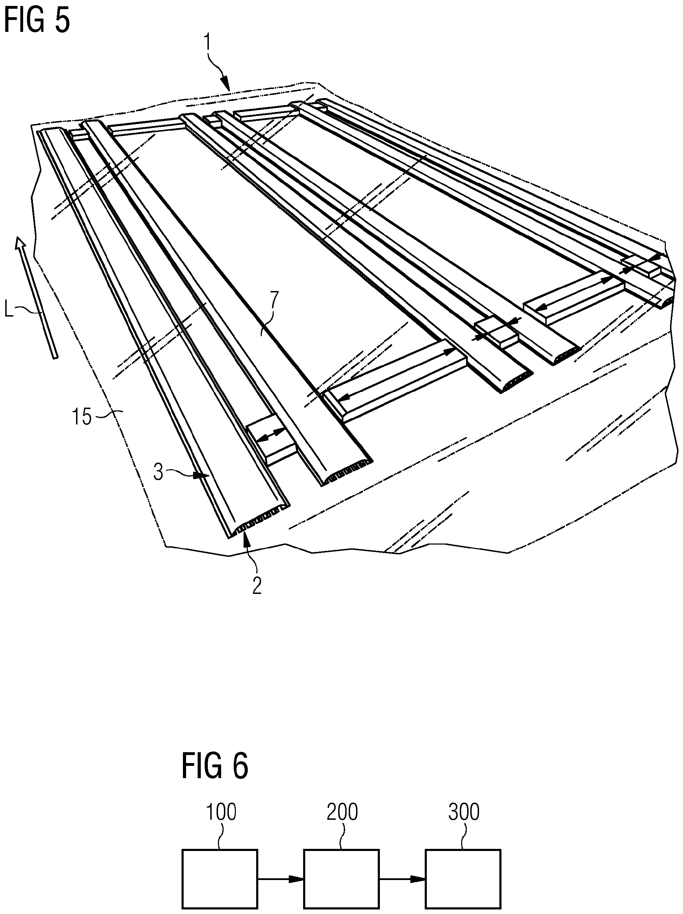

In fig. 5, the bonding material distribution device 1 is in a deployed state. In this example, the top plates 7 of six bonding material distribution devices 1 are fixed by an adhesive to a vacuum foil 15. The bonding material distribution devices 1 are parallel arranged side-by-side and grouped to pairs. A distance between the bonding material distribution devices 1 of a pair is less than the distances between the adjacent pairs of bonding material distribution devices 1. As can be seen best in the deployed state of fig. 5, the vacuum foil 15 fully covers all bonding material distribution devices 1. In the deployed state, a cross-section of the separations 5 is i-shaped.

In fig. 6, a preferred embodiment of the method for manufacturing a bonding material distribution device 1 for a VARTM-process for manufacturing a wind turbine component is schematically shown in a flow chart. In a first method action 100, a continuous main body 3 with at least one bonding material transport duct 2 is manufactured in an extrusion process. The extrusion process is performed such that the main body 3 and the at least one bonding material transport duct 2 are monolithically formed. This means that the main body 3 constitutes the top plate 7 and two outer side walls 9 for the at least one bonding material transport duct 2. Preferably, more bonding material transport ducts 2 are manufactured in this extrusion process in a way that the main body 3 constitutes separation walls 8 between adjacent bonding material transport ducts 2 as well. Further preferred, the at least one bonding material transport duct 2 comprises a slit-like discharge opening 6, facing away from the top plate 7.

In a second method action 200, the at least one bonding material transport duct 2 is cut by a cutting tool or punched by a punching tool into a plurality of duct segments 4. Thereby, separations 5 between the duct segments 4 are formed. This separation process is performed in a way that the main body 3 maintains a continuous part. Preferably, the separation process is performed in a way that the separation 5 separates the separation walls 8 and the outer side walls 9 completely. Further preferred, the separation process is performed in a way that the separation 5 cuts into a part of the top plate 7.

In a third method action 300, the main body 3 with the duct segments 4 is coiled-up, preferably onto a spool 10. This is performed in a way that the top plates 7 are facing towards an inside of the spool 10 and the separations 5 are facing away from the inside of the spool 10.

## Claims

1. Bonding material distribution device (1) for a VARTM-process for manufacturing a wind turbine component, comprising a bonding material transport duct (2) and a main body (3), wherein the bonding material transport duct (2) is arranged at the main body (3),
**characterized in**
**that** the bonding material transport duct (2) comprises a plurality of duct segments (4), arranged in-line and separated from each other by a separation (5), wherein the main body (3) is located aside the separation (5).

2. Bonding material distribution device (1) according to claim 1,
**characterized in**
**that** a longitudinal extension of the main body (3) is at least three times of the longitudinal extension of the duct segments (4).

3. Bonding material distribution device (1) according to claim 1 or 2,
**characterized in**
**that** the duct segments (4) have a material discharge opening (6), facing away from the main body (3).

4. Bonding material distribution device (1) according to claim 3,
**characterized in**
**that** the material discharge opening (6) extends along the longitudinal direction (L) of the duct segments (4).

5. Bonding material distribution device (1) according to any of the previous claims,
**characterized in**
**that** the main body (3) constitutes a top plate (7) of the duct segments.

6. Bonding material distribution device (1) according to any of the previous claims,
**characterized in**
**that** a plurality of duct segments (4) is arranged side-by-side at the main body (3), interconnected by the main body (3) and aligned with a plurality of duct segments (4) and thus forming a plurality of parallel arranged bonding material transport ducts (2).

7. Bonding material distribution device (1) according to claim 6,
**characterized in**
**that** the main body (3) constitutes a common separation wall (8) of two side-by-side arranged bonding material transport ducts (2).

8. Bonding material distribution device (1) according to any of the previous claims,
**characterized in**
**that** the main body (3) constitutes an outer side wall (9) of the bonding material transport ducts (2).

9. Bonding material distribution device (1) according to any of the previous claims,
**characterized in**
**that** the main body (3) is monolithically formed with the duct segments (4).

10. Bonding material distribution device (1) according to any of the previous claims,
**characterized in**
**that** the main body (3) and the duct segments (4) are manufactured by an extrusion process, followed by a cutting and/or punching process.

11. Bonding material distribution device (1) according to any of the previous claims,
**characterized in**
**that** the bonding material distribution device (1) is coiled-up on a spool (10) and is configured for being unwound from the spool (10) to fit to a flat surface.

12. Bonding material distribution device (1) according to any of the previous claims,
**characterized in**
**that** the main body (3) and/or the bonding material transport ducts (2) are covered by a flow mesh and/or felt and/or peel ply and/or a vacuum foil (11).

13. Method for manufacturing a bonding material distribution device (1) for a VARTM-process for manufacturing a wind turbine component, comprising:
- manufacturing a continuous main body (3) with at least one bonding material transport duct (2) in an extrusion process,
- cutting or punching the at least one bonding material transport duct (2) into a plurality of duct segments (4) in a way that the main body (3) maintains a continuous part, and
- coiling-up the main body (3) with the duct segments (4).

14. Method according to claim 13,
**characterized in**
**that** the cutting or punching is performed with the material of the bonding material transport duct (2) being still warm from the extrusion process.

15. Method according to claim 13 or 14,
**characterized in**
**that** after the cutting or punching and before the coiling-up, the main body (3) and/or the bonding material transport duct (2) is covered by a layer of flow mesh and/or a layer of felt and/or a layer of peel ply and/or a layer of vacuum foil (11).
